# EUROPÄISCHE PATENTSCHRIFT

(11) **EP 3 724 817 B1**
(45) Veröffentlichungstag und Bekanntmachung des Hinweises auf die Patenterteilung: **10.04.2024**
(21) Anmeldenummer: 18800093.9
(22) Anmeldetag: 07.11.2018
(51) Int. Cl.: G06K 19/07, G06K 19/077, G06K 17/00, B65B 57/00, B65B 59/04, B65B 65/00

(54) **VORRICHTUNG ZUM BEHANDELN VON UNTERSCHIEDLICHEN BEHÄLTERTYPEN**
DEVICE FOR HANDLING DIFFERENT CONTAINER TYPES
DISPOSITIF DESTINÉ AU TRAITEMENT DE DIVERS TYPES DE CONTENANTS

(30) Priorität: 14.12.2017 DE 102017129996
(43) Veröffentlichungstag der Anmeldung: 21.10.2020
(73) Patentinhaber: KHS GmbH, 44143 Dortmund (DE)
(72) Erfinder: WOLF, Uwe, 55593 Rüdesheim (DE); Schug, Nils, 55499 Riesweiler (DE)
(86) Internationale Anmeldenummer: PCT/EP2018/080410
(87) Internationale Veröffentlichungsnummer: WO 2019/115096

(56) Entgegenhaltungen:
- EP-A1- 2 332 847
- DE-A1-102011 054 890
- DE-B3-102012 221 458
- DE-U1-202008 017 413

## Beschreibung

Die vorliegende Erfindung betrifft eine Vorrichtung zum Behandeln von unterschiedlichen Verpackungs- und/oder Behältertypen, wie zum Beispiel Behälterfüllmaschinen, Behälterreinigungsmaschinen, Sterilisationsmaschinen, Verpackungsmaschinen, Etikettiermaschinen, Transportvorrichtungen etc.. Die Vorrichtung hat hierbei nicht-behälterspezifische erste Vorrichtungsteile, wie zum Beispiel Drehmotoren, Förderbänder, Halte- und Tragelemente für Formatteile und dergleichen, deren Anordnung und Ausbildung unabhängig von dem behandelten Behältertyp ist. Zudem hat die Vorrichtung zweite behälterspezifische Vorrichtungsteile. Diese behälterspezifischen zweiten Vorrichtungsteile, nachfolgend in dieser Anmeldung auch kurz Formatteile genannt, werden bereits bei der Herstellung mit einer nicht veränderbaren Identifizierungsmarkierung oder auch Kennung versehen. Derartige Formatteile sind z.B. die Geländer, Zentrierelemente, Halte- und Positionierelemente, formatabhängige Förderaggregate, wie bspw. eine Transportschnecke und vieles mehr.

Die Identifizierungsmarkierung wird zum Beispiel bei der Herstellung in oder an ein Teil des Formatteils eingeritzt, eingefräst oder eingelasert. Dies bietet sich häufig an, weil etliche Formatteile durch Lasern, d.h. Laserschneiden, hergestellt werden und somit das Aufbringen der Identifizierungsmarkierung im gleichen Prozess wie die Herstellung selbst erfolgen kann. Es ist jedoch auch möglich, Markierungen anders aufzubringen, wie zum Beispiel durch Aufkleber, Farbauftrag, Siebdruck, Farbbesprühen etc.. Aufgrund dieser unveränderbaren Identifizierungsmarkierung ist der Hersteller einer derartigen Behandlungsvorrichtung in der Lage, jedes Formatteil inklusive seiner Zuordnung zu einem bestimmten Anwender und/oder Behältertyp eindeutig zu identifizieren. Es ist hierbei anzumerken, dass Formatteile für unterschiedliche Behältertypen oft in nur ganz geringen Nuancen abweichen, die nur messtechnisch, aber kaum vom Bediener mit dem bloßen Auge unterscheidbar sind. So kann zum Beispiel eine Innenführung an einem Transportstern kreisrunde Ausnehmungen haben, die beim einen Behältertyp um 0,5 mm größer sind als bei einem anderen.

Um diese abweichenden Formatteile voneinander zu unterscheiden, sind diese Identifizierungsmarkierungen oder Kennungen notwendig.

Es ist nun so, dass beim Anwender, das heißt beim Vorrichtungsnutzer, bspw. einem Abfüllunternehmen oder einem Getränkeherstellern, oft eigene Markierungen für die Formatteile verwendet werden, die den jeweiligen vom Hersteller unterschiedlichen Vorgaben möglichst individuell und mit unterschiedlichem Gehalt gestaltet sein sollen, wobei jedoch die entsprechenden Daten in der Regel in irgendeiner Weise auf den Behältertyp bezogen sind.

Aus der Druckschrift EP 2 332 847 A1 ist eine Vorrichtung zum Behandeln von Behältnissen, mit einer Transporteinrichtung bekannt geworden, welche die Behältnisse entlang eines vorgegebenen Transportpfades transportiert, mit einem Formatteil, welches an der Vorrichtung auswechselbar angeordnet ist, wobei das Formatteil ein insbesondere auf RFID - Technologie basierendes erstes Identifikationselement zum Identifizieren des Formatteils aufweist. Diese Vorrichtung zeichnet sich insbesondere dadurch aus, dass das Formatteil weiterhin eine Positionserfassungseinrichtung aufweist, welche eine Position wenigstens eines Elements der Vorrichtung gegenüber dem Formatteil erfasst und ein für diese Position charakteristisches Signal ausgibt.

Ferner ist aus der Druckschrift DE 20 2008 017 413 U1 eine Datenträgervorrichtung bekannt geworden, die einem Transportmittel zugeordnet ist und ein von Lesegeräten auslesbares Funketikett aufweist, das über einen mit Nutzdaten zur Identifikation und zur Zustandsüberwachung des Transportmittels belegbaren Nutzdatenspeicher verfügt. Diese Datenträgervorrichtung zeichnet sich insbesondere dadurch aus, dass die Datenträgervorrichtung über ein mit dem Nutzdatenspeicher des Funketiketts datentechnisch verbundenes Funkmodul zum Aussenden von aus dem Nutzdatenspeicher auslesbaren Datenelementen oder zum Empfangen von in den Nutzdatenspeicher einlesbaren Datenelementen verfügt.

Überdies ist aus der Druckschrift DE 10 2012 221 458 B3 ein System zur automatischen Formatverstellung einer Anlage zur Prozessierung von Komponenten unterschiedlicher Formate bekannt geworden, die dazu ausgebildet ist, zumindest Komponenten einer ersten Art und Komponenten einer zweiten Art gemeinsam zu prozessieren. Das umfasst System mehrere steuerbare Antriebseinrichtungen, mittels derer jeweilige in der Anlage angeordnete Formatelemente verstellbar sind, sowie eine mit den Antriebseinrichtungen verbundene, vorzugsweise speicherprogrammierbare, Steuerungseinrichtung, die dazu ausgebildet ist, die mehreren Antriebseinrichtungen in Abhängigkeit von einem Formatverstellungssignal automatisch aus einer jeweiligen Ausgangsstellung in eine jeweilige Endstellung zu steuern. Die Steuerungseinrichtung ist ferner dazu ausgebildet, in Abhängigkeit zumindest von dem Formatverstellungssignal für jede der Antriebseinrichtungen festzulegen, ob das mittels der Antriebseinrichtung verstellbare Formatelement ausgetauscht werden muss, und eine Antriebseinrichtung, für die dies zutrifft, beim Steuern aus der jeweiligen Ausgangsstellung in die jeweilige Endstellung automatisch über eine jeweilige Austauschstellung zu steuern, in der das mittels der Antriebseinrichtung verstellbare Formatelement gegen ein anderes Formatelement austauschbar ist. Das System umfasst ferner Zustandssensoren, die dazu ausgebildet sind, einen jeweiligen Zustand und/oder eine Anzahl der von der Anlage prozessierten Komponenten der ersten und/oder der zweiten Art zu ermitteln und ein entsprechendes jeweiliges Zustandssignal an die Steuerungseinrichtung auszugeben, wobei die Steuerungseinrichtung ferner dazu ausgebildet ist, die Antriebseinrichtungen in Abhängigkeit von den jeweiligen Zustandssignalen derart zu steuern, dass die Formatverstellung der Anlage für die Komponenten der ersten Art und die Komponenten der zweiten Art synchronisiert erfolgt.

Schließlich ist aus der Druckschrift DE 10 2011 890 A1 eine Behälterbehandlungsanlage zur Herstellung und/oder Bearbeitung von Produkten und/oder Produktgruppen mit mindestens zwei Arbeitsbereichen bekannt geworden, wobei die Arbeitsbereiche jeweils mindestens ein austauschbares Arbeitswerkzeug und/oder ein anpassbares Formatteil umfassen und wobei die Behälterbehandlungsanlage mindestens eine zu den mindestens zwei Arbeitsbereichen bewegbare und insbesondere verfahrbare Handhabungsvorrichtung umfasst, welche über Zentriermittel selektiv mit jeweils einem der Arbeitsbereiche verbindbar ist und welche Mittel zum Austausch der Arbeitswerkzeuge und/oder zur Anpassung des Formatteile des jeweiligen Arbeitsbereichs umfasst.

Es ist eine Aufgabe der vorliegenden Erfindung, eine Behandlungsvorrichtung für unterschiedliche Behältertypen zu schaffen, die eine individuelle anwenderspezifische Kennung der unterschiedlichen Formatteile seitens des Anwenders ermöglicht.

Diese Aufgabe wird erfindungsgemäß durch eine Vorrichtung mit den Merkmalen des Anspruchs 1 und durch ein Verfahren mit den Merkmalen des Anspruchs 11 realisiert. Vorteilhafte Weiterbildungen der Erfindung sind Gegenstand der zugeordneten abhängigen Ansprüche. Vorteilhafte Ausführungsformen und Weiterbildungen der Erfindung sind ebenfalls in der Beschreibung und in den Zeichnungen beschrieben.

Erfindungsgemäß hat zumindest ein Teil der zweiten Vorrichtungsteile, nachfolgend auch als Formatteile bezeichnet, zusätzlich zur Identifizierungsmarkierung wenigstens ein elektronisches Tag (auch Smart Tag genannt), das einen Speicherplatz für anwenderspezifische oder behälterspezifische Daten aufweist. Auf diese Weise werden insbesondere zwei Vorteile erhalten. Zum einen behält man mit der Beibehaltung der Identifizierungsmarkierung eine unveränderliche Markierung, die jedes Formatteil eindeutig beschreibt und identifiziert und die herstellerseitig einseitig festgelegt werden kann. Zum anderen wird über das vorzugsweise kabellos beschreibbare und lesbare elektronische Tag eine variable Kennung geschaffen, die es dem Anwender ermöglicht, individuelle Daten, wie zum Beispiel einen direkten Verweis auf die Verpackungs- und/oder Behältertypen, Produktsorten/-arten, spezielle Nummernkreise, etc., in das elektronische Tag hineinzuschreiben und diese Information für die Verwendung von Formatteilbaugruppen für unterschiedliche Verpackungs- oder Behältertypen heranzuziehen.

Der Anwender kann dann unabhängig vom Hersteller der Behälterbehandlungsvorrichtung seine eigene individuelle Kennzeichnung der Formatteile vornehmen, wobei diese individuellen Kennzeichnungen wahlweise schon seitens des Herstellers in das elektronische Tag geschrieben werden können oder auch erst beim Anwender selbst. Der Hersteller ist ein z.B. ein Getränkeanlagenhersteller und der Anwender ist z.B. ein Getränkehersteller oder -abfüller.

Ein großer Vorteil besteht zudem darin, dass das elektronische Tag mit einer größeren Menge an Information beschreibbar ist, so dass an anwenderspezifischen Anforderungen an den Informationsgehalt des elektronischen Tags kaum Grenzen gesetzt sind.

Vorzugsweise sind alle Formatteile, das heißt alle zweiten Vorrichtungsteile, der Behälterbehandlungsmaschine mit dem elektronischen Tag versehen. Auf diese Weise wird wirklich sichergestellt, dass alle in die Behälterbehandlungsmaschine eingebauten Formatteile für den zu behandelnden gewünschten Behältertyp angepasst sind. Ein falsches Formatteil kann hier zu Handhabungsproblemen und damit zu einer starken Beeinträchtigung der Effizienz der Behälterbehandlungsmaschine führen, soweit ein Betrieb mit einem falschen Formatteil überhaupt möglich ist.

Erfindungsgemäß ist das elektronische Tag ein als Smart ESL Infotag ausgebildetes E-Paper. Auf diese Weise ist ein einfaches Aufschreiben und Einlesen der vom Anwender gewünschten behältertypspezifischen Information auf das Tag als auch ein Lesen des Tags möglich.

Ein "Infotag" benötigt für die erstmalige Anzeige der Information und für das Ändern der angezeigten Information eine Energiequelle, welche beispielsweise eine Batterie sein kann. Besteht keine Verbindung zu einer Energiequelle, weil beispielsweise die Batterie entladen ist, wird trotzdem die letztmalig angezeigte Information ohne Energiebedarf (passiv) angezeigt.

Das Infotag kann beliebige Informationen, wie z.B. Text, Symbole, und Grafiken anzeigen. Dazu zählen auch QR Codes. Der QR Code kann z.B. eine Teile- bzw. IDnummer des Formatteils oder einen Link beinhalten, der vom Kunden z.B. mit einem QR-Code Scanner oder entsprechend ausgerüstetem Smartphone gelesen werden kann. Mit diesem Link kann z.B. der Kunde oder ein Servicetechniker mit einer QR Code App auf einem Smartphone ein defektes Formatteil direkt beim Hersteller bestellen. Damit entfällt jegliche aufwendige Suche in der Maschinendokumentation einer Behälterbehandlungsanlage.

Die dargestellten Informationen können beim Bestehen einer Energieversorgung jederzeit geändert werden. So können Daten vorzugsweise drahtlos, z.B. per Funk auf die an den Formatbauteilen oder an einem bestimmten Formatbauteil montierten Infotag(s) übertragen werden. Das Infotag zeigt somit an, was ihm einmalig per Funk mit beispielsweise 868MHZ von einem Accesspoint Router übermittelt wird. Von einem Accesspoint aus können bis zu 3.000 Infotags verwaltet werden.

Das Infotag kann auch zusätzliche Darstellungsoptionen beinhalten, wie z.B. Blinken der Anzeige des Infotags. So kann vorzugsweise ein beliebiges Formatbauteil oder wahlweise alle Formatbauteile einer Bauteilgruppe über eine zentrale Steuerung, vorzugsweise einen damit verbundenen Computer angewählt werden, was das/die zugeordnete(n) Infotag(s) dazu veranlasst, zu blinken und/oder den Inhalt einzulesen und/oder zu ändern.

Vorzugsweise gehören zu den Hardwarekomponenten in Verbindung mit den Infotags ein PC oder Mikroprozessor, die zugehörige Software und wenigstens eine Eingabe/Ausgabeschnittstelle, wie z.B. Bildschirm, Tastatur, Maus, Touchpad etc.

Vorzugsweise werden in diesem System die gewünschten Daten, z.B. über eine Zuordnungstabelle erstellt und per drahtlose Datenübermittlung, wie mittels Funktechnik, auf die am/an den Formatbauteil(en) montierten Infotag(s) übertragen. Die am Infotag dargestellten Informationen können dann z.B. visuell oder automatisch über eine Software, z.B. einen QR-Code Scanner gelesen werden, wobei eine visuelle Ablesung durch die Blinkfunktion unterstützt werden kann.

Beispielsweise kann ein Smart ESL Infotag ein 3-Farb Display in Verbindung mit einer LED Blinkfunktion aufweisen. Ein E-Paper der Firma Elnk, das E-Ink^{®} Dot Matrix Display, verfügt z.B. über eine optimale Auflösung und hervorragende Lesbarkeit auch bei schwierigen Lichtverhältnissen.

Die SmartESL können optional mit einem aktiven NFC Chip ausgerüstet werden, d.h. einem Chip für drahtlose Nahfeldübertragung. Angesteuert über einen Transmitter können die Infotags sehr schnell auf Schreib- und/oder Leseanweisungen bzw. Funktionsanweisungen wie Blinken regieren. Getaktet mit einer Frequenz von z.B. mehr als 868Mhz reagieren die Infotags innerhalb von nur 1 Sekunde auf Anweisungen wie z.B. neue Anzeigedaten oder Blinkfunktion.

Infotags gehören zu den E-Paper-Displays, die das Licht wie normales Papier reflektieren, es sind also passive (nichtleuchtende) Anzeigen. In Anlehnung an den englischen Sprachgebrauch werden solche Displays auch als reflektive Displays bezeichnet. Texte oder Bilder werden bei manchen Anzeigetechniken von E-Paper dauerhaft angezeigt, ohne dass dafür eine Erhaltungsspannung erforderlich ist. Die Anzeige kann jedoch zu einem späteren Zeitpunkt geändert werden. Elektronisches Papier (E-Paper) ist bei einigen Herstellern - ähnlich wie normales Papier - biegsam.

Obwohl es verschiedene Verfahren zur Herstellung elektronischen Papiers gibt und sich inzwischen eine größere Anzahl von Firmen mit deren Erforschung und Weiterentwicklung beschäftigt, findet man im allgemeinen Sprachgebrauch den Begriff E-Paper oder E-Ink^{®} (E-Paper der Eink Holding, Taiwan) oft als synonyme Bezeichnung für Elektronisches Papier. Ein derartiges E-Paper eignet sich hervorragend als elektronisches Tag im Rahmen der vorliegenden Erfindung. E-Paper Displays werden derzeit in den meisten modernen E-Book-Readern verwendet. Technisch basiert das E-Paper Display auf der Erscheinung der Elektrophorese.

In einer vorteilhaften Ausführung der Erfindung kann das Tag auch einen ersten Bereich aufweisen, der nur lesbar ist und nur einmal beschrieben werden kann, das heißt eine Art ROM-Bereich (z.B. eine ID-Nr.), und einen zweiten Bereich, der als Lese-Schreib-Bereich ausgebildet ist. Auf diese Weise kann der Anwender dann beim ersten Mal in den ROM-Bereich unveränderliche Information in das Tag schreiben, wie zum Beispiel Informationen über die geometrischen Abmessungen, vielleicht sogar Informationen betreffend die Identifizierungsmarkierung selbst, und in den beschreibbaren Bereich behältertypspezifische Information, die sich über die Zeit ändern kann, wenn sich zum Beispiel die Bezeichnung eines Behältertyps ändert.

Vorzugsweise enthält die Vorrichtung ein mobiles Lesegerät für das elektronische Tag. Dieses Lesegerät kann dann von dem Monteur in die Nähe des Formatteils gebracht werden, wodurch es dann in der Lage ist, die auf dem elektronischen Tag gespeicherte Information auf einem Display des mobilen Lesegeräts darzustellen. Auf diese Weise kann ein Monteur bei den montierten Formatteilen schnell verifizieren, ob alle Formatteile tatsächlich dem gewünschten Behältertyp entsprechen.

Vorzugsweise sendet das Lesegerät dann eine Leseabfrage an das elektronische Tag bzw. Infotag und versorgt dieses dabei automatisch mit Strom, so dass es in der Lage ist, die gespeicherte Information an das Lesegerät drahtlos per Funk abzusenden.

Diese Ausführungsform der Erfindung ist somit in der Handhabung besonders vorteilhaft.

Vorzugsweise ist die Identifizierungsmarkierung an dem Formatteil neben dem elektronischen Tag angeordnet, so dass ein Monteur bei Bedarf auch die Identifizierungsmarkierung schnell lesen kann, falls zum Beispiel bei einem batteriebetriebenen elektronischen Tag die Stromversorgung ausfällt.

Vorzugsweise ist eine der Behälterbehandlungsvorrichtung zugeordnete oder externe Steuereinheit mit einem Speicher vorgesehen, welche mit einer Schreibeinrichtung zur Beschriftung der elektronischen Tags verbunden ist. Auf diese Weise können alle elektronischen Tags entweder herstellerseitig und/oder anwenderseitig mit anwenderspezifischen Kennungen versehen werden. Die Schreibeinrichtung kann vorzugsweise auch als Leseeinrichtung ausgebildet sein, um somit beschriftete elektronische Tags auslesen zu können, um diese vor Inbetriebnahme zu überprüfen.

Die Identifizierungsmarkierung ist vorzugsweise als Farbmarkierung, Ätzmarkierung oder Lasermarkierung an einem festen oder strukturellen Bestandteil des Formatteils ausgebildet. Da die Identifizierungsmarkierung unveränderbar sein soll, ist es vorteilhaft, wenn diese zum Beispiel in ein Teil, zum Beispiel ein Blech des Formatteils, eingeätzt oder eingelasert ist. Auf diese Weise wird sichergestellt, dass die Identifizierungsmarkierung niemals geändert oder beseitigt werden kann.

Vorzugsweise handelt es sich bei der Behälterbehandlungsvorrichtung um eine Transportvorrichtung. Es kann sich jedoch auch um alle anderen im Zusammenhang mit der Herstellung von Getränken verbundenen Behälterbehandlungsgeräte handeln, wie zum Beispiel Füllmaschinen, Reinigungsmaschinen, Sterilisationsmaschinen, Etikettiermaschinen, Verpackungsmaschinen und dergleichen oder kombinierte Anlagen der obigen Maschinen.

Vorzugsweise hat die Vorrichtung eine Steuereinheit mit einem Speicher, in welchem die Identifizierungsmarkierungen der Formatteile zusammen mit den zugeordneten Verpackungs- und/oder Behältertypen gespeichert sind. Auf diese Weise kann zum Beispiel bei batteriebetriebenen elektronischen Tags sichergestellt werden, dass selbst bei einem Verlust der in den elektronischen Tags enthaltenen Information eine schnelle Zuordnung eines Formatteils zu einem Verpackungs- und/oder Behältertyp möglich ist. Das elektronische Tag kann somit leicht ausgetauscht und aufgrund der im Speicher gespeicherten Informationen wieder neu beschrieben werden.

Vorzugsweise sind in dem Speicher auch nicht nur die Identifizierungsmarkierungen, sondern auch die Dateninhalte der zugeordneten elektronischen Tags jedes Formatteils abgespeichert, so dass eine Zuordnung zwischen Identifizierungsmarkierung und dem Inhalt des elektronischen Tags ganz schnell zum Beispiel bei einem Verlust oder Ausfall eines elektronischen Tags sofort wiederhergestellt werden kann.

Vorzugsweise ist in dem Speicher der Lagerort der Formatteile einer einem Verpackungs- und/oder Behältertyp und/oder Anwender zugeordneten Formatteilbaugruppe unter Zuordnung ihrer Identifizierungsmarkierungen und/oder Dateninhalte der elektronischen Tags abgelegt. Auf diese Weise lassen sich schnell die Lagerorte der einzelnen Formatteile vom Anwender auffinden und als Formatteilbaugruppen bei einem Umbau der Behälterbehandlungsvorrichtung für einen anderen Behältertyp schnell zusammenstellen und einbauen. Eine Formatteilbaugruppe ist die Gesamtheit aller Formatteile, die zur Behandlung eines bestimmten Verpackungs- und/oder Behältertyps in die Behälterbehandlungsvorrichtung eingebaut werden müssen.

Vorzugsweise enthält die Vorrichtung eine Verifizierungsschaltung, die die Identifikationsmarkierungen, das heißt den Inhalt der Identifizierungsmarkierungen, und/oder den Dateninhalt der elektronischen Tags mit einem zugeordneten Behältertyp vergleicht und diese Verifizierung bei den montierten Formatteilen vornimmt, um dadurch sicherzustellen, dass alle eingebauten bzw. montierten Formatteile dem gewünschten Verpackungs- und/oder Behältertyp entsprechen, d.h. die gesamte Formatteilbaugruppe korrekt ist. Auf diese Weise lassen sich Probleme bei der späteren Behälterbehandlungsvorrichtung aufgrund falsch eingebauter Formatteile verhindern und die Verifizierung lässt sich aufgrund insbesondere kabelloser elektronischer Tags ausgesprochen schnell realisieren.

Die Erfindung betrifft ebenfalls ein Verfahren zum Betreiben einer Behälterbehandlungsvorrichtung, die geeignet ist zur Behandlung unterschiedlicher Verpackungs- und/oder Behältertypen. Es handelt sich bei der Behälterbehandlungsvorrichtung um eine Behälterbehandlungsvorrichtung, wie sie oben beschrieben ist. Erfindungsgemäß ist zumindest ein Teil der Formatteile bzw. zweiten Vorrichtungsteile, vorzugsweise alle Formatteile, zusätzlich zur Identifizierungsmarkierung mit einem elektronischen Tag versehen und das elektronische Tag wird durch den Anwender der Behälterbehandlungsvorrichtung mit anwender- und/oder behälterspezifischen Daten beschrieben.

Dieses ermöglicht es dem Anwender, individualisierte Kennzeichnungen für die unterschiedlichen Formatteile zu verwenden, die optimal auf die eigenen Verpackungs- und/oder Behältertypen bzw. Kennzeichnungssystematik zugeschnitten sind und zum Beispiel direkte Auskunft über diese Behältertypen geben. Dies ist herstellerseitig nicht möglich, da eine Behälterbehandlungsmaschine an viele unterschiedliche Anwender ausgeliefert bzw. verkauft wird, die selbstverständlich unterschiedliche Verpackungs- und/oder Behältertypen und unterschiedliche Bezeichnungen und Kennzeichnungssystematiken haben. Das elektronische Tag ermöglicht es hingegen, dass jeder Anwender seine eigene Verpackungs- und/oder Behältertypkennzeichnung und/oder weitere Information in das elektronische Tag hineinschreiben kann.

Vorzugsweise werden für eine Einstellung der Behälterbehandlungsvorrichtung auf einen bestimmten Behältertyp die elektronischen Tags der einer Formatteilbaugruppe zugeordneten Formatteile mit einem Lesegerät beschrieben und somit gekennzeichnet. Später bei der Anwendung werden die elektronischen Tags der Formatteile ausgelesen und anhand des Leseergebnisses für ihre Verwendung in der Behandlungsvorrichtung zur Behandlung des gewünschten Verpackungs- und/oder Behältertyps ausgewählt und/oder verifiziert. Auf diese Weise kann zum einen die Montage der richtigen Formatteile sichergestellt werden und zum anderen kann nach dem Verbauen der Formatteile noch einmal verifiziert werden, dass tatsächlich alle dem gewünschten Behältertyp zugeordneten Formatteile eingebaut worden sind.

Vorzugsweise wird das Verfahren im Zusammenhang mit den unterschiedlichen Ausführungsformen der oben beschriebenen Behandlungsvorrichtung verwendet.

Vorzugsweise werden die einem Verpackungs- und/oder Behältertyp zugeordneten Formatteile zu einer Formatteilbaugruppe zusammengefasst und als solche gemeinsam gelagert und/oder zum Anwender versandt. Der Anwender hat somit bei Erhalt einer gesamten Formatteilbaugruppe für einen Behältertyp gleich die Möglichkeit, alle elektronischen Tags der Formatteile der Formatteilbaugruppe mit seinen entsprechenden individuellen Verpackungs- und/oder Behältertypdaten zu beschreiben und damit für eine Montage und Verifizierung in seiner Behandlungsvorrichtung verwendbar zu machen.

Vorzugsweise werden fernlesbare und fernbeschreibbare elektronische Tags verwendet, die vorzugsweise von einem zentralen Gerät ausgelesen werden können, das in der Nähe der Behälterbehandlungsvorrichtung angeordnet ist. Es wäre daher vorteilhaft, wenn die Reichweite für die Funkübertragung zwischen dem Lesegerät und den elektronischen Tags wenigstens 50 cm und vorzugsweise wenigstens 5 m, maximal jedoch nicht mehr als 20 m, beträgt. Auf diese Weise kann ohne großen mobilen Aufwand mit mobilen oder sogar fest installierten Lesegeräten bzw. Lese/Schreibgeräten eine Auswahl der richtigen Formatteilbaugruppe und der richtigen Formatteile sichergestellt werden. Nach der Montage kann der der Einbau der richtigen Formatteile mit deren Hilfe noch einmal verifiziert werden.

Es ist für den Fachmann offensichtlich, dass die oben beschriebenen Ausführungsformen, und zwar sowohl vorrichtungsmäßig als auch verfahrensmäßig, in beliebiger Weise miteinander verwendet und kombiniert werden können.

Folgende Ausdrücke werden synonym verwendet: Identifizierungsmarkierung - Kennung; zweites Vorrichtungsteil - Formatteil; Formatteilbaugruppe - alle einem Behältertyp zugeordneten Formatteile einer Behälterbehandlungsvorrichtung; Behandlungsvorrichtung - Behälterbehandlungsvorrichtung; Steuer-/Sendeeinheit - Steuereinrichtung;

Die Erfindung wird nachfolgend beispielsweise anhand der schematischen Zeichnung beschrieben. In dieser zeigen:
- Fig. 1: eine schematische Darstellung der Beschriftung von elektronischen Tags in Formatteilen seitens des Anwenders,
- Fig. 2: eine Verifizierung der eingebauten Formatteile mittels eines mobilen Lesegeräts,
- Fig. 3: das zentrale Auslesen der elektronischen Tags der eingebauten Formatteile zur Verifizierung der Formatteile einer betriebsfertigen Behandlungsvorrichtung.

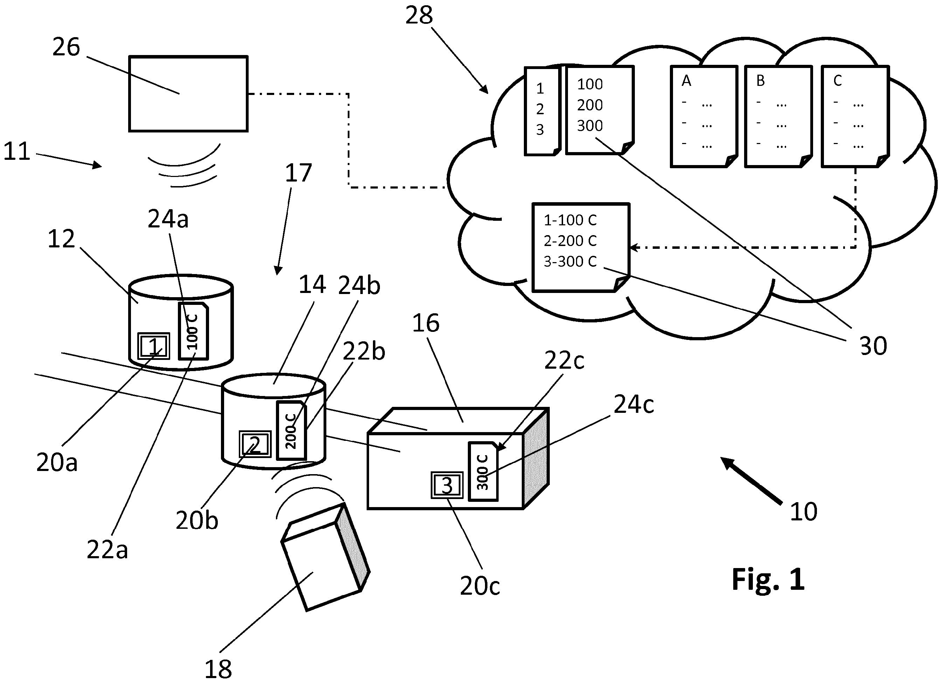

Fig. 1 zeigt einen Ausschnitt einer Behälterbehandlungsvorrichtung 10 mit einem System 11 zur Handhabung der einem Behältertyp zugeordneten Formatteile 12, 14, 16, nämlich einer Innenführung 12, einer Außenführung 14 und einer Etikettiervorrichtung 16. In der Figur sind die ersten Vorrichtungsteile der Vorrichtung, wie z.B. Motoren Förderbänder, Füllventile etc. nicht dargestellt sondern nur die behälter- oder anwenderspezifischen zweiten Vorrichtungsteile bzw. Formatteile. Jedes Formatteil 12, 14, 16 einer behältertypspezifischen Formatteilbaugruppe 17 trägt eine bei der Herstellung aufgebrachte unveränderbare Kennung 20, 20a, 20b, 20c als auch ein elektronisches Tag 22a, 22b, 22c, was z.B. auch an dem Formatteil 12, 14, 16 im Rahmen seiner Herstellung befestigt werden kann. Dieses elektronische Tag 22a, 22b, 22c wird zum Beispiel beim Anwender, z.B. einem Getränkeabfüller oder Getränkehersteller über ein mobiles Schreib-Lesegerät 18 mit anwender- bzw. behälterspezifischen Informationen 24a, 24b, 24c beschrieben, wobei diese Informationen 24a, 24b, 24c von dem mobilen Lese-Schreibgerät 18 über die zentrale Lese-Schreibeinrichtung 26 der Steuereinrichtung 28 erhalten wird. Dort sind in wenigstens einem Speicher 30 die Zuordnungen zwischen der Kennung jedes einzelnen Formatteils 12, 14, 16 und der Information 24a, 24b, 24c im zugeordneten elektronischen Tag 22a, 22b, 22c gespeichert. Dieser Vorgang wird zum Beispiel durchgeführt, wenn alle Formatteile 12, 14, 16 einer in die Behälterbehandlungsvorrichtung 10 einzubauenden Formatteilbaugruppe 17 beim Anwender ankommen. Dies kann jedoch auch beim ersten Mal vor der Montage in die Behälterbehandlungsvorrichtung 10 beim Anwender geschehen oder sogar beim Hersteller der Behälterbehandlungsvorrichtung vor dem Ausliefern der Formatteilbaugruppe 17 an den Anwender. Nach dem Beschriftungsvorgang der elektronischen Tags 22a-c sind die behälter- und/oder anwenderspezifischen Daten der Formatteile 12, 14, 16 der Formatteilbaugruppe 17 in den elektronischen Tags 22a, 22b, 22c gespeichert, so dass die Identifizierung der Formatteile 12, 14, 16 beim Anwender mittels der elektronischen Tags 22a, 22b, 22c realisiert werden kann.

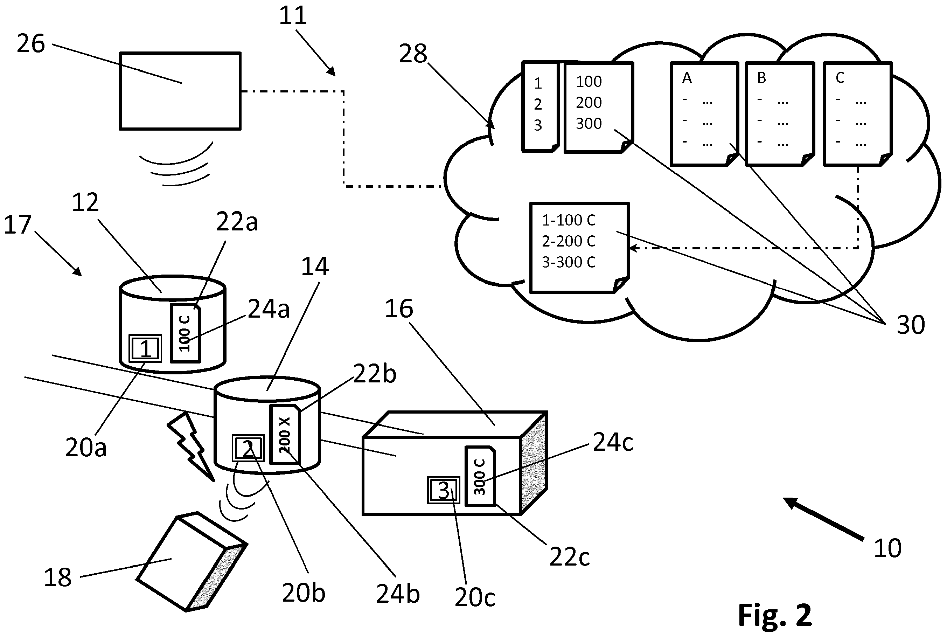

Fig. 2 zeigt zum Beispiel den Vorgang bei der Verifizierung der einzelnen Formatteile 12, 14, 16 im Rahmen der Montage in eine Behälterbehandlungsvorrichtung 10. Das mobile Lese-Schreibgerät 18 erfasst hierbei das elektronische Tag 22a-c der unterschiedlichen Formatteile 12, 14, 16 der Formatteilbaugruppe 17, wodurch aufgrund der Kommunikation zwischen dem mobilen Schreib-Lesegerät 18 und der zentralen Lese-Schreibeinrichtung 26 der Steuereinrichtung 28 aufgrund eines Vergleichs der Daten 24a, 24b, 24c auf den elektronischen Tags 22a, 22b, 22c mit den Daten im Speicher 30 verifiziert werden kann, dass zum Beispiel die Außenführung 14 nicht zu der Soll-Formatteilbaugruppe 17 gehört, da korrekterweise eine Außenführung mit den Daten 200c im elektronischen Tag verwendet werden sollte und nicht 200x. Daher ist die Außenführung 14 der Fig. 2 nicht für den Behältertyp passend. Es kann somit bei der Montage oder auch nach der Montage bzw. Installation ganz schnell verifiziert werden, ob alle Formatteile 12, 14, 16 tatsächlich zu der Formatteilbaugruppe 17 eines Behältertyps gehören.

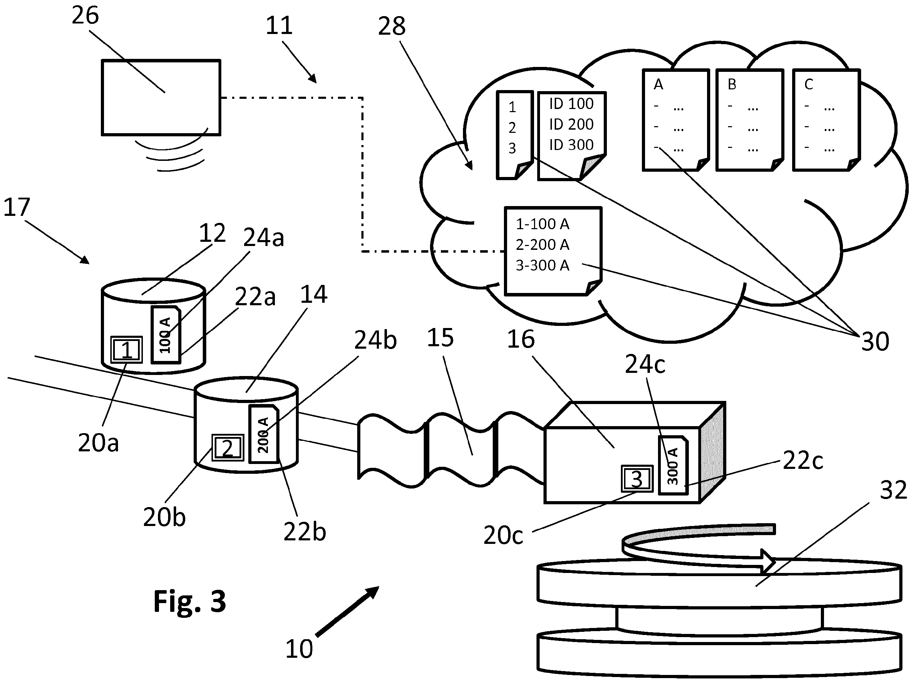

Fig. 3 zeigt einen Rotor 32 als ersten Vorrichtungsteil einer Behälterbehandlungsvorrichtung 10 in Verbindung mit einer Formatteilbaugruppe 17 bestehend aus einer Innenführung 12, einer Außenführung 14 und einer Etikettiermaschine 16. In den Figuren werden identische oder funktionsgleiche Teile mit identischen Bezugszeichen versehen. In Fig. 3 wird laufend oder in Intervallen, z.B. bei jedem Neustart der Behälterbehandlungsvorrichtung 10 über eine Funkverbindung der elektronischen Tags 22a, 22b, 22c mit der zentrale Lese-Schreibeinrichtung 26 der Steuereinrichtung 28 verifiziert, dass tatsächlich alle Formatteile 12, 14, 16 der Formatteilbaugruppe 17 dem gewünschten Behältertyp entsprechen und somit wird ein reibungsloser Betrieb der Behälterbehandlungsvorrichtung in Verbindung mit dem gewünschten Behältertyp erzielt. Prinzipiell ist anzumerken, dass jede Behälterbehandlungsvorrichtung 10 neben den behälterspezifischen Formatteilen 12, 14, 16 auch erste nicht behälterspezifische Vorrichtungsteile, wie zum Beispiel Rotoren 32 etc. und Förderer, umfasst, die niemals in Abhängigkeit vom Behältertyp ausgetauscht werden müssen, es sei denn aus anderen Gründen, z.B. Verschleiß.

In den Zeichnungen ist die Steuereinrichtung 28 als Wolke dargestellt, was bedeutet, dass die Kommunikation über die zentrale Lese/Schreibeinrichtung 26 auch mit einem über Internet verbundenen Server 28 stattfinden kann, in dem die Daten in Art einer Speicherwolke gespeichert sind.

Die Erfindung ist nicht auf das oben beschriebene Ausführungsbeispiel beschränkt, sondern kann innerhalb des Schutzbereichs der nachfolgenden Patentansprüche beliebig variiert werden.

## Patentansprüche

1. Vorrichtung (10) zum Behandeln von unterschiedlichen Verpackungs- und/oder Behältertypen, welche Vorrichtung (10) nicht packmaterial- oder behältertypspezifische erste Vorrichtungsteile (32) und austauschbare behältertypspezifische zweite Vorrichtungsteile (12, 14, 16) aufweist, welche zweiten Vorrichtungsteile (12, 14, 16) jeweils mit einer unveränderbaren Identifizierungsmarkierung (20a, 20b, 20c) versehen sind, wobei zumindest ein Teil der zweiten Vorrichtungsteile (12, 14, 16) zusätzlich zur Identifizierungsmarkierung (20a, 20b, 20c) wenigstens ein elektronisches Tag (22a, 22b, 22c) aufweist, das einen Anzeigebereich und einen Speicherplatz für anwender- und/oder behälterspezifische Daten (24a, 24b, 24c) aufweist, und wobei das elektronische Tag (22a, 22b, 22c) ein als Smart ESL Infotag ausgebildetes E-Paper ist.

2. Vorrichtung (10) nach Anspruch 1, **dadurch gekennzeichnet, dass** das elektronische Tag (22a, 22b, 22c) kabellos beschreibbar und lesbar ist.

3. Vorrichtung (10) nach einem der vorhergehenden Ansprüche, **dadurch gekennzeichnet, dass** sie wenigstens ein mobiles Lese/Schreibgerät (18) für das elektronische Tag (22a, 22b, 22c) aufweist.

4. Vorrichtung (10) nach einem der vorhergehenden Ansprüche, **dadurch gekennzeichnet, dass** das elektronische Tag (22a, 22b, 22c) einen nur einmal beschreibbaren ersten Bereich und einen wiederholt beschreibbaren zweiten Bereich aufweist.

5. Vorrichtung (10) nach einem der vorhergehenden Ansprüche, **dadurch gekennzeichnet, dass** die Identifikationsmarkierung (20a, 20b, 20c) neben dem elektronischen Tag (22a, 22b, 22c) positioniert ist, um so gemeinsam ablesbar zu sein.

6. Vorrichtung (10) nach einem der vorhergehenden Ansprüche, **dadurch gekennzeichnet, dass** die Identifizierungsmarkierung (20a, 20b, 20c) als Farbmarkierung, Ätzmarkierung oder Lasermarkierung an einem festen Bestandteil des zweiten Vorrichtungsteils (12, 14, 16) ausgebildet ist.

7. Vorrichtung (10) nach einem der vorhergehenden Ansprüche, **dadurch gekennzeichnet, dass** sie eine Behälterfüllvorrichtung, eine Behälterreinigungsvorrichtung und/oder Behältertransport- und/oder -verpackungsvorrichtung ist.

8. Vorrichtung (10) nach einem der vorhergehenden Ansprüche, **dadurch gekennzeichnet, dass** sie eine Steuereinheit (28) mit einem Speicher (30) aufweist, welche mit einer Schreibeinrichtung zur Beschriftung der elektronischen Tags (22a, 22b, 22c) verbunden ist.

9. Vorrichtung (10) nach Anspruch 8, **dadurch gekennzeichnet, dass** in dem Speicher (30) der Lagerort der zweiten Vorrichtungsteile (12, 14, 16) unter Zuordnung ihrer Identifizierungsmarkierungen (20a, 20b, 20c) und/oder Daten (24a, 24b, 24c) der elektronischen Tags (22a, 22b, 22c) abgelegt ist.

10. Vorrichtung (10) nach einem der vorhergehenden Ansprüche, **dadurch gekennzeichnet, dass** sie eine Überprüfungsschaltung aufweist, die die Daten der Identifikationsmarkierung (20a, 20b, 20c) und/oder die Daten (24a, 24b, 24c) des elektronischen Tags (22a, 22b, 22c) mit einem Verpackungs- und/oder Behältertyp vergleicht und in Abhängigkeit von dem Vergleichsergebnis ein Verifizierungssignal ausgibt.

11. Verfahren zum Einstellen einer Behandlungsvorrichtung (10) für unterschiedliche Verpackungs- und/oder Behältertypen, welche Behandlungsvorrichtung (10) nicht verpackungs- und/oder behälterspezifische erste Vorrichtungsteile (32) und austauschbare behältertypspezifische zweite Vorrichtungsteile (12, 14, 16) aufweist, welche zweiten Vorrichtungsteile (12, 14, 16) jeweils mit einer unveränderbaren Identifizierungsmarkierung (20a, 20b, 20c) versehen werden, wobei zumindest ein Teil der zweiten Vorrichtungsteile (12, 14, 16) zusätzlich zur Identifizierungsmarkierung (20a, 20b, 20c) mit einem elektronischen Tag (22a, 22b, 22c) versehen werden, wobei das elektronische Tag (22a, 22b, 22c) ein als Smart ESL Infotag ausgebildetes E-Paper ist, und dass das elektronische Tag (22a, 22b, 22c) mindestens einmalig mit verpackungs- und/oder behälterspezifischen Daten (24a, 24b, 24c) vorzugsweise mittels einer zentralen Steuer-/Sendeeinheit (28) in Verbindung mit einer Schreibeinrichtung (26) beschrieben wird.

12. Verfahren nach Anspruch 11, **dadurch gekennzeichnet, dass** für eine Anpassung der Behandlungsvorrichtung (10) auf einen bestimmten Verpackungs- und/oder Behältertyp die Daten (24a, 24b, 24c) der elektronischen Tags (22a, 22b, 22c) der zweiten Vorrichtungsteile (12, 14, 16) mit einem Lesegerät ausgelesen und die zweiten Vorrichtungsteile (12, 14, 16) anhand des Leseergebnisses für ihre Verwendung in der Behandlungsvorrichtung (10) zur Behandlung des gewünschten Behältertyps ausgewählt und/oder verifiziert werden.

13. Verfahren nach Anspruch 11 oder 12, **dadurch gekennzeichnet, dass** es auf einer Vorrichtung (10) nach einem der Ansprüche 1 bis 10 ausgeführt wird.

14. Verfahren nach einem der Ansprüche 11 bis 13, **dadurch gekennzeichnet, dass** die einem Behältertyp zugeordneten zweiten Vorrichtungsteile (12, 14, 16) der Behandlungsvorrichtung (10) zu einer Formatteilbaugruppe zusammengefasst und als solche gemeinsam gelagert und/oder zum Anwender versandt werden.

15. Verfahren nach einem der Ansprüche 11 bis 14, **dadurch gekennzeichnet, dass** die Identifizierungsmarkierung (20a, 20b, 20c) im Rahmen der Herstellung des zweiten Vorrichtungsteils (12, 14, 16) fest in das zweite Vorrichtungsteil (12, 14, 16) gestanzt, gelasert oder graviert wird.

16. Verfahren nach einem der Ansprüche 11 bis 15, **dadurch gekennzeichnet, dass** als elektronische Tags (22a, 22b, 22c) der zweiten Vorrichtungsteile (12, 14, 16) fernlesbare und -beschreibbare elektronische Tags (22a, 22b, 22c) verwendet werden, und dass die elektronischen Tags (22a, 22b, 22c) aller zweiten Vorrichtungsteile (12, 14, 16) der Behandlungsvorrichtung (10) gemeinsam beschrieben werden.

17. Verfahren nach einem der Ansprüche 11 bis 16, **dadurch gekennzeichnet, dass** die elektronischen Tags (22a, 22b, 22c) der zweiten Vorrichtungsteile (12, 14, 16) einer Formatteilbaugruppe beim Hersteller der Behandlungsvorrichtung (10) beschriftet werden.

## Claims

1. Device (10) for handling different packaging and/or container types, said device (10) having first device parts (32) which are not specific to packing material or container types, and interchangeable second device parts (12, 14, 16) which are specific to container type, said second device parts (12, 14, 16) each having an immutable identification marking (20a, 20b, 20c), wherein at least one part of the second device parts (12, 14, 16) has, in addition to the identification marking (20a, 20b, 20c), at least one electronic tag (22a, 22b, 22c), which has a display region and a memory space for user-specific and/or container-specific data (24a, 24b, 24c), and wherein the electronic tag (22a, 22b, 22c) is an E-paper configured as a smart ESL infotag.

2. Device (10) according to claim 1, **characterised in that** the electronic tag (22a, 22b, 22c) can be written and read without a cable.

3. Device (10) according to any one of the preceding claims, **characterised in that** it comprises at least one mobile reading/writing device (18) for the electronic tag (22a, 22b, 22c).

4. Device (10) according to any one of the preceding claims, **characterised in that** the electronic tag (22a, 22b, 22c) comprises a first region which can only be written on once, and a second region which can be written on repeatedly.

5. Device (10) according to any one of the preceding claims, **characterised in that** the identification marking (20a, 20b, 20c) is positioned next to the electronic tag (22a, 22b, 22c) in order for them to be read off in common.

6. Device (10) according to any one of the preceding claims, **characterised in that** the identification marking (20a, 20b, 20c) is configured as a colour marking, an etch marking, or laser marking on a fixed component part of the second device part (12, 14, 16).

7. Device (10) according to any one of the preceding claims, **characterised in that** it is a container filling device, a container cleaning device, and/or container transport and/or packing device.

8. Device (10) according to any one of the preceding claims, **characterised in that** it comprises a control unit (28) with a memory (30), which is connected to a writing device for writing on the electronic tag (22a, 22b, 22c).

9. Device (10) according to claim 8, **characterised in that** the storage location of the second device parts (12, 14, 16) is deposited in the memory (30), with the allocation of its identification markings (20a, 20b, 20c) and/or data (24a, 24b, 24c) to the electronic tag (22a, 22b, 22c).

10. Device (10) according to any one of the preceding claims, **characterised in that** it comprises a checking circuit, which compares the data of the identification marking (20a, 20b, 20c) and/or the data (24a, 24b, 24c) of the electronic tag (22a, 22b, 22c) with a packing type and/or container type, and, depending on the result of the comparison, issues a verification signal.

11. Method for adjusting a handling device (10) for handling different packaging and/or container types, said device (10) having first device parts (32) which are not specific to packing material or container types, and interchangeable second device parts (12, 14, 16) which are specific to container type, said second device parts (12, 14, 16) each having an immutable identification marking (20a, 20b, 20c), wherein at least one part of the second device parts (12, 14, 16) has, in addition to the identification marking (20a, 20b, 20c), at least one electronic tag (22a, 22b, 22c), wherein the electronic tag (22a, 22b, 22c) is an E-paper configured as a smart ESL infotag, and that the electronic tag (22a, 22b, 22c) is written on at least once with packing-specific and/or container-specific data (24a, 24b, 24c), preferably by means of a central control/transmitter unit (28) which is connected to a writing device (26).

12. Method according to claim 11, **characterised in that**, for an adjustment of the container device (10) to a specific packing type and/or container type, the data (24a, 24b, 24c) of the electronic tag (22a, 22b, 22c) of the second device parts (12, 14, 16) is read out with a reader device, and the second device parts (12, 14, 16) are selected and/or verified on the basis of the reading result for their use in the handling device (10) for the handling of the desired container type.

13. Method according to claim 11 or 12, **characterised in that** it is carried out on a device (10) according to any one of claims 1 to 10.

14. Method according to any one of claims 11 to 13, **characterised in that** the second device parts (12, 14, 16) of the handling device (10), assigned to a container type, are assembled to form a format module, and as such are stored together and/or sent to the user.

15. Method according to any one of claims 11 to 14, **characterised in that**, within the framework of the production of the second device part (12, 14, 16), the identification marking (20a, 20b, 20c) is stamped, lasered, or engraved securely into the second device part (12, 14, 16).

16. Method according to any one of claims 11 to 15, **characterised in that**, as electronic tags (22a, 22b, 22c) of the second device parts (12, 14, 16), use is made of electronic tags (22a, 22b, 22c) which can be read and written on remotely, and that the electronic tags (22a, 22b, 22c) of all the second device parts (12, 14, 16) of the handling device (10) are written on in common.

17. Method according to any one of claims 11 to 16, **characterised in that** the electronic tags (22a, 22b, 22c) of the second device parts (12, 14, 16) of a format module are written on at the manufacturer of the handling device (10).

## Revendications

1. Dispositif (10) de traitement de divers types d'emballage et/ou de contenant, lequel dispositif (10) présente des premières parties de dispositif (32) non spécifiques au matériau d'emballage ou au type de contenant et des deuxièmes parties de dispositif (12, 14, 16) spécifiques au type de contenant remplaçables, lesquelles deuxièmes parties de dispositif (12, 14, 16) sont pourvues respectivement d'un marquage d'identification (20a, 20b, 20c) non modifiable, dans lequel au moins une partie des deuxièmes parties de dispositif (12, 14, 16) présente en plus du marquage d'identification (20a, 20b, 20c) au moins une étiquette électronique (22a, 22b, 22c), qui présente une zone d'affichage et un emplacement de stockage pour des données (24a, 24b, 24c) spécifiques à l'utilisateur et/ou au contenant, et dans lequel l'étiquette électronique (22a, 22b, 22c) est un papier électronique réalisé en tant qu'étiquette intelligente ESL [electronic shelf label - étiquette d'étagère électronique].

2. Dispositif (10) selon la revendication 1, **caractérisé en ce que** l'étiquette électronique (22a, 22b, 22c) est inscriptible et peut être lue sans câble.

3. Dispositif (10) selon l'une quelconque des revendications précédentes, **caractérisé en ce qu'**il présente au moins un appareil de lecture/d'écriture mobile (18) pour l'étiquette électronique (22a, 22b, 22c).

4. Dispositif (10) selon l'une quelconque des revendications précédentes, **caractérisé en ce que** l'étiquette électronique (22a, 22b, 22c) présente une première zone inscriptible seulement une fois et une deuxième zone inscriptible de manière répétée.

5. Dispositif (10) selon l'une quelconque des revendications précédentes, **caractérisé en ce que** le marquage d'identification (20a, 20b, 20c) est positionné à côté de l'étiquette électronique (22a, 22b, 22c) pour pouvoir être consultés ainsi conjointement.

6. Dispositif (10) selon l'une quelconque des revendications précédentes, **caractérisé en ce que** le marquage d'identification (20a, 20b, 20c) est réalisé en tant que marquage en couleur, marquage par gravure ou marquage laser sur un composant fixe de la deuxième partie de dispositif (12, 14, 16).

7. Dispositif (10) selon l'une quelconque des revendications précédentes, **caractérisé en ce qu'**il est un dispositif de remplissage de contenant, un dispositif de nettoyage de contenant et/ou un dispositif de transport et/ou d'emballage de contenant.

8. Dispositif (10) selon l'une quelconque des revendications précédentes, **caractérisé en ce qu'**il présente une unité de commande (28) avec un système de stockage (30), laquelle est reliée à un système d'écriture destiné à doter les étiquettes électroniques (22a, 22b, 22c) d'une inscription.

9. Dispositif (10) selon la revendication 8, **caractérisé en ce que** la localisation des deuxièmes parties de dispositif (12, 14, 16) en associant leurs marquages d'identification (20a, 20b, 20c) et/ou des données (24a, 24b, 24c) des étiquettes électroniques (22a, 22b, 22c) sont sauvegardées dans le système de stockage (30).

10. Dispositif (10) selon l'une quelconque des revendications précédentes, **caractérisé en ce qu'**il présente un circuit de contrôle, qui compare les données du marquage d'identification (20a, 20b, 20c) et/ou les données (24a, 24b, 24c) de l'étiquette électronique (22a, 22b, 22c) à un type d'emballage et/ou de contenant et émet un signal de vérification en fonction du résultat de comparaison.

11. Procédé de réglage d'un dispositif de traitement (10) pour différents types d'emballage et/ou de contenant, lequel dispositif de traitement (10) présente des premières parties de dispositif (32) non spécifiques à l'emballage et/ou au contenant et des deuxièmes parties de dispositif (12, 14, 16) spécifiques au contenant remplaçables, lesquelles deuxièmes parties de dispositif (12, 14, 16) sont pourvues respectivement d'un marquage d'identification (20a, 20b, 20c) non modifiable, dans lequel au moins une partie des deuxièmes parties de dispositif (12, 14, 16) sont pourvues en plus du marquage d'identification (20a, 20b, 20c) d'une étiquette électronique (22a, 22b, 22c), dans lequel l'étiquette électronique (22a, 22b, 22c) est un papier électronique réalisé en tant qu'étiquette intelligente ESL, et que l'étiquette électronique (22a, 22b, 22c) est inscrite au moins une fois avec des données (24a, 24b, 24c) spécifiques à l'emballage et/ou au contenant de préférence au moyen d'une unité centrale de commande/d'envoi (28) en lien avec un système d'écriture (26).

12. Procédé selon la revendication 11, **caractérisé en ce qu'**en vue d'une adaptation du dispositif de traitement (10) à un type d'emballage et/ou de contenant donné, les données (24a, 24b, 24c) des étiquettes électroniques (22a, 22b, 22c) des deuxièmes parties de dispositif (12, 14, 16) sont lues avec un appareil de lecture et les deuxièmes parties de dispositif (12, 14, 16) sont sélectionnées et/ou vérifiées à l'aide du résultat de lecture pour leur utilisation dans le dispositif de traitement (10) pour traiter le type de contenant souhaité.

13. Procédé selon la revendication 11 ou 12, **caractérisé en ce qu'**il est exécuté sur un dispositif (10) selon l'une quelconque des revendications 1 à 10.

14. Procédé selon l'une quelconque des revendications 11 à 13, **caractérisé en ce que** les deuxièmes parties de dispositif (12, 14, 16) du dispositif de traitement (10) associées à un type de contenant sont regroupées en un module partiel de format et sont entreposées en tant que tel conjointement et/ou sont expédiées à l'utilisateur.

15. Procédé selon l'une quelconque des revendications 11 à 14, **caractérisé en ce que** le marquage d'identification (20a, 20b, 20c) est estampé, découpé au laser ou gravé de manière solidaire dans la deuxième partie de dispositif (12, 14, 16) dans le cadre de la fabrication de la deuxième partie de dispositif (12, 14, 16).

16. Procédé selon l'une quelconque des revendications 11 à 15, **caractérisé en ce que** des étiquettes électroniques (22a, 22b, 22c) lisibles à distance et inscriptibles sont utilisées en tant qu'étiquettes électroniques (22a, 22b, 22c) des deuxièmes parties de dispositif (12, 14, 16), et que les étiquettes électroniques (22a, 22b, 22c) de toutes les deuxièmes parties de dispositif (12, 14, 16) du dispositif de traitement (10) sont inscrites conjointement.

17. Procédé selon l'une quelconque des revendications 11 à 16, **caractérisé en ce que** les étiquettes électroniques (22a, 22b, 22c) des deuxièmes parties de dispositif (12, 14, 16) d'un module partiel de format sont dotées d'une inscription chez le fabricant du dispositif de traitement (10).
